**Europäisches Patentamt**

**European Patent Office**

**Office européen des brevets**

(11) Veröffentlichungsnummer: **0 215 220**
**B1**

(12) **EUROPÄISCHE PATENTSCHRIFT**

(45) Veröffentlichungstag der Patentschrift:
06.09.89

(21) Anmeldenummer: 86109167.6

(22) Anmeldetag: 04.07.86

(51) Int. Cl.⁴: **B60R 22/20**, B60R 22/26,
B64D 25/06

(54) Sicherheitsgurt, insbesondere 3-Punkt-Sicherheitsgurt für Fahrzeuge, Flugzeuge oder dergleichen.

(30) Priorität: 27.08.85 DE 3530495

(43) Veröffentlichungstag der Anmeldung:
25.03.87 Patentblatt 87/13

(45) Bekanntmachung des Hinweises auf die Patenterteilung:
06.09.89 Patentblatt 89/36

(84) Benannte Vertragsstaaten:
DE FR GB IT

(56) Entgegenhaltungen:
DE-A- 1 954 676
DE-A- 2 132 709
DE-A- 2 345 847
FR-A- 1 239 213
JP-B-52 045 370

(73) Patentinhaber: **Dr.Ing.h.c. F. Porsche
Aktiengesellschaft, Porschestrasse 42,
D-7000 Stuttgart 40(DE)**

(72) Erfinder: **Hardeland, Hans-Martin, Dipl.-Ing. FH,
Hoffmannstrasse 6, D-7251 Mönsheim(DE)**
Erfinder: **Lange, Sven, Dipl.-Ing., Auf der Steige 28,
D-7255 Rutesheim(DE)**

ACTORUM AG

## Beschreibung

Die Erfindung bezieht sich auf einen Sicherheitsgurt, insbesondere auf einen 3-Punkt-Sicherheitsgurt für Fahrzeuge, Flugzeuge oder dergleichen mit einem Schrägschultergurt, dessen oberer Haltepunkt durch eine an einem Lehnenrahmen eines Sitzes angeordnete Schlitzführung gebildet wird, wobei ein unteres Ende der schräg zu einer Sitzmittellängsebene verlaufenden Schlitzführung weiter von dieser entfernt ist als ein oberes Ende und ein endseitiger Gurtabschnitt des Schrägschultergurtes mit einer Aufrolleinrichtung zusammenwirkt.

Bei einem bekannten Sicherheitsgurt (DE-OS 21 32 709) der eingangs genannten Gattung wird die Schlitzführung durch eine am Lehnenrahmen angeordnete Gurtöse gebildet, von der aus ein endseitiger Gurtabschnitt vertikal nach unten zu einer an einer Sitzschiene befestigten Aufrolleinrichtung verläuft. Zur Erleichterung des Gurtanlegens ist unterhalb der Gurtöse eine schwenkbare Hebelanordnung vorgesehen, die mit dem Schrägschultergurt zusammenwirkt. Dieser Anordnung haftet der Nachteil an, daß der obere Haltepunkt des Schrägschultergurtes nicht an die unterschiedlichen Schulterhöhen der jeweiligen Fahrzeuginsassen anpaßbar ist, was den Bedienungskomfort beeinträchtigt. Außerdem besteht bei dieser Ausführung die Gefahr, daß sich der Gurt infolge der starken Umlenkung nach der Gurtöse in sich verdreht. Ferner ist durch die gewählte Lage der Aufrolleinrichtung eine beträchtliche Gurtlänge erforderlich.

Aus der DE-OS 23 45 847 ist ein Kraftfahrzeugsitz mit einem zugeordneten Sicherheitsgurt bekannt, wobei der obere Halte punkt mittels einer Vorrichtung in Höhenrichtung verstellbar ist. Durch die Möglichkeit der individuellen Einstellung des oberen Haltepunktes sind jedoch Fehleinstellungen nicht auszuschließen. Schließlich weist diese Vorrichtung eine Vielzahl von Bauteilen auf, wodurch ihre Herstellung aufwendig und teuer ist.

Aufgabe der Erfindung ist es, einen Sitz mit einem integrierten Sicherheitsgurt so auszubilden, daß sich der obere Haltepunkt des Schrägschultergurtes bei einfachem Aufbau für den jeweiligen Fahrzeuginsassen selbsttätig in eine funktionsgerechte Lage einstellt.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß sich durch die Art der Schlitzführung sowie durch die Lage der Aufrolleinrichtung selbsttätig eine funktionsgerechte Lage des oberen Haltepunktes einstellt. Durch den S-förmigen Formverlauf der Schlitzführung wird erreicht, daß der Schrägschultergurt in einer einmal eingestellten Lage (abhängig von der Schulterhöhe des jeweiligen Fahrzeuginsassen) verbleibt. Durch die Anordnung der Aufrolleinrichtung benachbart der Schlitzführung ist nur eine geringe Gurtlänge erforderlich. Das nachfolgend an die Schlitzführung angeordnete Umlenkelement sorgt für eine störungsfreie Führung des Gurtbandes zwischen der Aufrolleinrichtung und der Schlitzführung.

Ein Ausführungsbeispiel der Erfindung ist in der Zeichnung dargestellt und wird nachfolgend näher erläutert.

Es zeigt

Fig. 1 eine Schrägansicht von vorne auf einen Sitz mit einem integrierten Sicherheitsgurt,

Fig. 2 eine Schrägansicht von hinten auf diesen Sitz,

Fig. 3 eine Vorderansicht eines Lehnenrahmens des Sitzes mit der erfindungsgemäßen Anordnung des Sicherheitsgurtes,

Fig. 4 eine Einzelheit X der Fig. 3 in größerem Maßstab,

Fig. 5 einen Schnitt nach der Linie V-V der Fig. 4 in größerem Maßstab,

Fig. 6 einen Schnitt entsprechend Fig. 5 einer weiteren Ausführungsform.

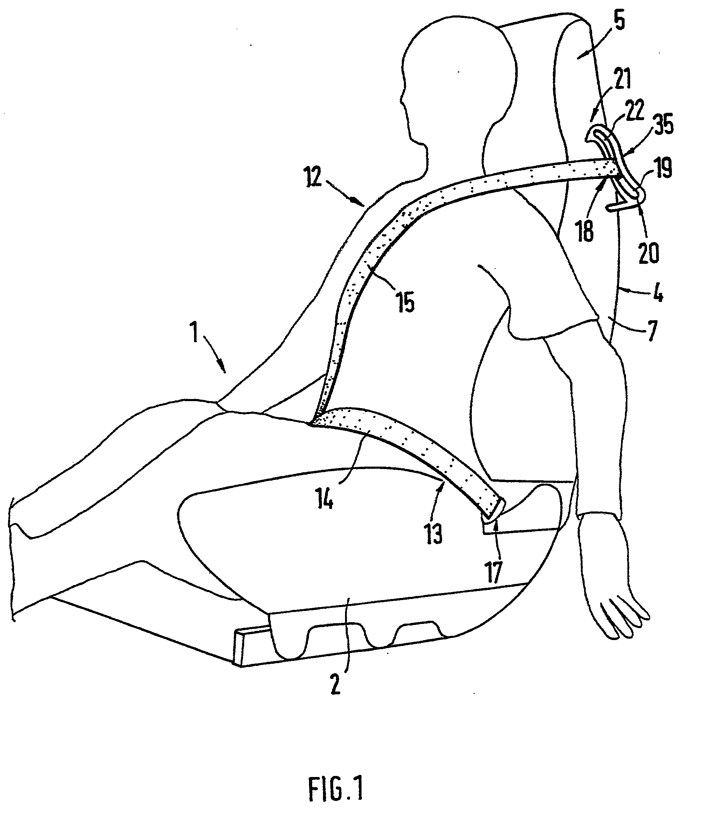

Der in Fig. 1 dargestellte Sitz 1 für ein Fahrzeug, ein Flugzeug oder dergleichen umfaßt ein Sitzteil 2 und eine, um eine horizontale Querachse 3 schwenkbare Rückenlehne 4, deren oberer Bereich eine feststehende Kopfstütze 5 bildet.

Die Rückenlehne 3 besteht im wesentlichen aus einem Lehnenrahmen 6 und einer Polsterung 7. Der Lehnenrahmen 6 umfaßt zwei mit Abstand zueinander verlaufende Seitenholme 8, die im Bereich der Kopfstütze 5 über einen Querabschnitt 9 miteinander verbunden sind. Benachbart der Querachse 3 erstreckt sich zwischen den beiden Seitenholmen 8 ein unterer Querträger 10. Unterhalb der Kopfstütze 5 ist ferner eine Querstrebe 11 zwischen den beiden Seitenholmen 8 angeordnet. Die Seitenholme 8 sind vorzugsweise als geschlossene Kastenträger ausgebildet und verlaufen mit einem unteren Bereich etwa parallel zu einer Sitzmittellängsebene A-A, wogegen sie in einem oberen Bereich schräg zu dieser Ebene geneigt sind.

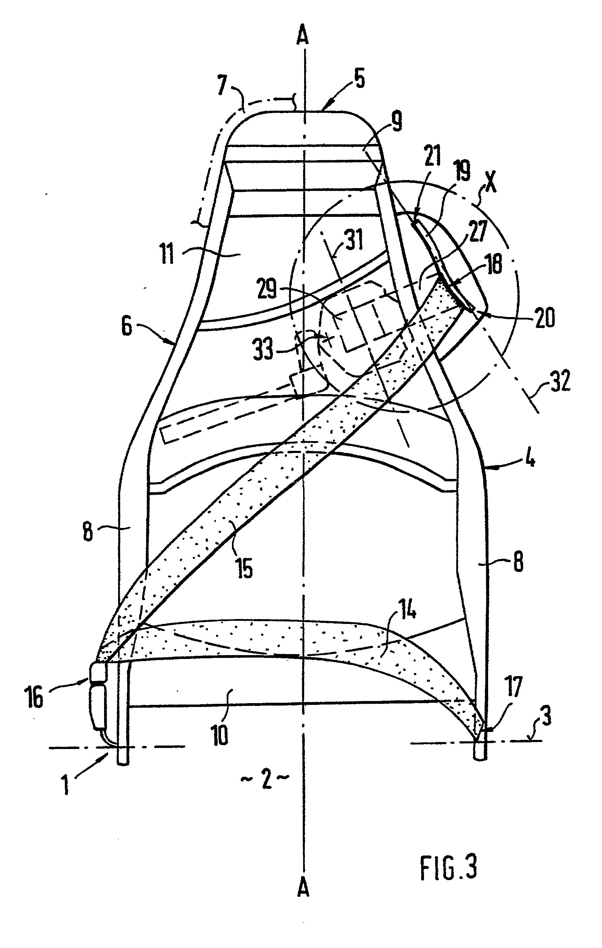

Zur Sicherung eines auf dem Sitz 1 befindlichen Fahrzeuginsassen 12 ist ein Sicherheitsgurt 13 vorgesehen, der gemäß den Fig. 1 bis 3 als 3-Punkt-Sicherheitsgurt ausgeführt ist. Dieser umfaßt einen Beckengurt 14 und einen Schrägschultergurt 15, die bei 16 einen gemeinsamen unteren Haltepunkt besitzen. Der Beckengurt 14 verläuft von Haltepunkt 16 zu einem zweiten, etwa in der gleichen Höhe angeordneten Haltepunkt 17 auf der anderen Seite des Sitzteiles 2. Die beiden Haltepunkt 16, 17 sind nach Fig. 3 unmittelbar am Sitz 1 angeordnet. Es besteht aber auch die Möglichkeit, daß die unteren Haltepunkte 16, 17 an angrenzenden Aufbauteilen vorgesehen sind.

Der Schrägschultergurt 15 erstreckt sich vom unteren Haltegurt 16 etwa diagonal zur Rückenlehne 4 verlaufend zur Schulter des Fahrzeuginsassen 12 und von dort etwa waagrecht zu einem oberen Haltepunkt 18. Dieser wird durch eine am Lehnenrahmen 6 angebrachte Schlitzführung 19 gebildet, die schräg zur Sitzmittellängsebene A-A geneigt ist, dergestalt, daß ein unteres Ende 20 der Schlitzführung 19 weiter von der Sitzmittellängsebene A-A entfernt ist als ein oberes Ende 21.

Die Schlitzführung 19 weist zur Anpassung an den jeweiligen Fahrzeuginsassen 12 eine entsprechende Breite auf und ist etwa in Schulterhöhe angeordnet. Die Breite der Schlitzführung 19 entspricht etwa der dreifachen Breite des Schrägschultergurtes 15, wodurch eine ausreichende Verstellmöglichkeit gegeben ist. Es besteht jedoch auch die Möglichkeit, die Schlitzführung 9 gegebenenfalls noch breiter auszubilden.

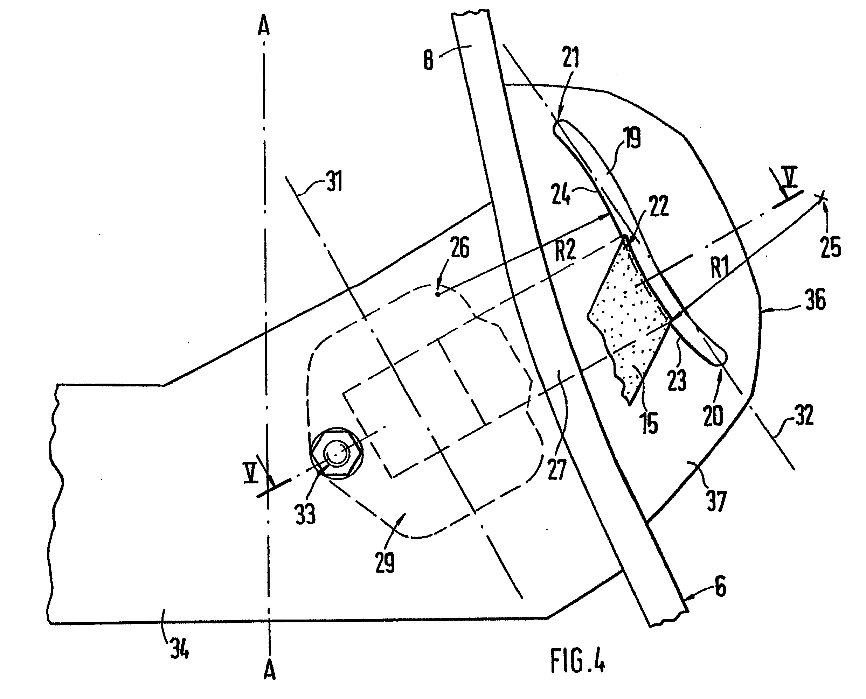

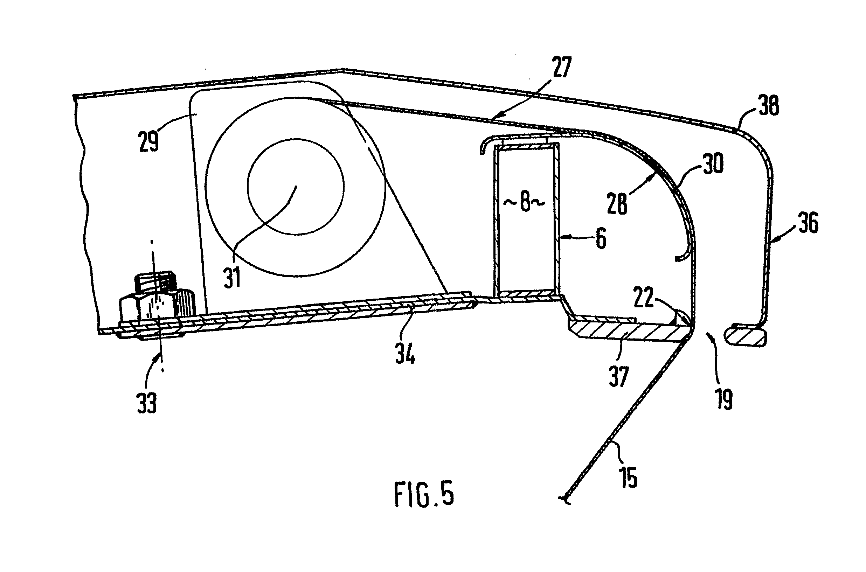

Die in Fahrzeugquerrichtung gesehen, außerhalb des Lehnenrahmens 6 liegende Schlitzführung 19 weist entsprechend den Fig. 3 und 5 einen annähernd S-förmigen Formverlauf auf. Der S-förmige Formverlauf der mit dem Gurtband 15 zusammenwirkenden Seite 22 der Schlitzöffnung 19 wird durch zwei aneinandergesetzte Kreisbogenabschnitte 23, 24 gebildet. Die Mittelpunkte 25, 26 der beiden Kreisbogenabschnitte 23, 24 liegen auf gegenüberliegenden Seiten der Schlitzführung 19. Im gewählten Ausführungsbeispiel sind die Radien R1 und R2 der beiden Kreisbogenabschnitte 23 und 24 etwa gleich groß (Fig. 4).

Die Schlitzführung 19 kann aber auch einen geradlinigen oder einen kurvenförmigen Formverlauf aufweisen (nicht dargestellt).

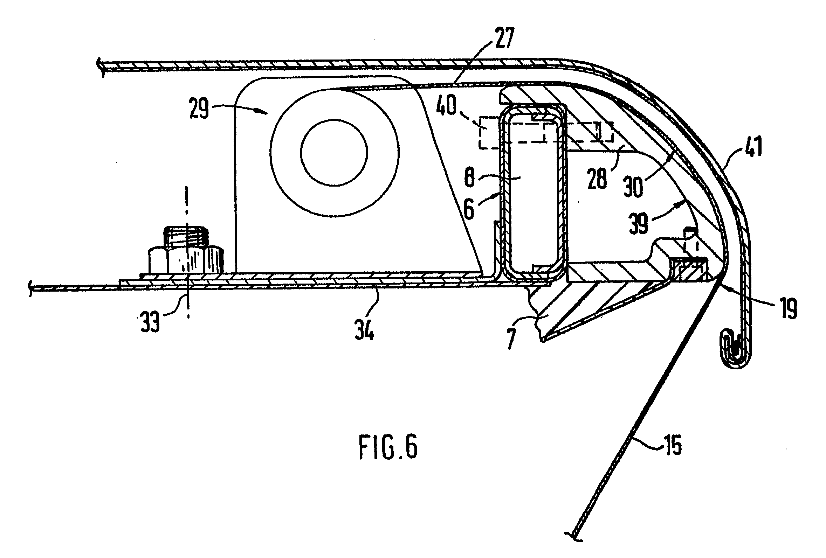

Ein endseitiger Gurtabschnitt 27 wird nach der Schlitzführung 19 über ein Umlenkelement 28 geführt und wirkt mit einer Aufrolleinrichtung 29 zusammen (Fig. 5 und 6). Das Umlenkelement 28 weist eine kreisförmige Leitfläche 30 für den Gurtabschnitt 27 auf und ist am Lehnenrahmen 6 befestigt. In den Fig. 1 bis 4 ist das Umlenkelement 28 nicht dargestellt.

Die Aufrolleinrichtung 29 ist derart am Lehnenrahmen 6 befestigt, daß seine Drehachse 31 etwa gleichgerichtet ist zu einer die Schlitzöffnung 19 in Längsrichtung durchdringenden Hilfsebene 32. Gemäß Fig. 4 ist ein Befestigungspunkt 33 der Aufrolleinrichtung 29 benachbart der Sitzmittellängsebene A-A angeordnet. Zur Erleichterung der Verstellbewegung des Schrägschultergurtes 15 in der Schlitzführung 19 ist die Aufrolleinrichtung 29 an einer Quertraverse 34 des Lehnenrahmens 6 schwenkbar gelagert. Die Aufrolleinrichtung 29 kann jedoch auch feststehend an der Quertraverse 34 angeordnet sein.

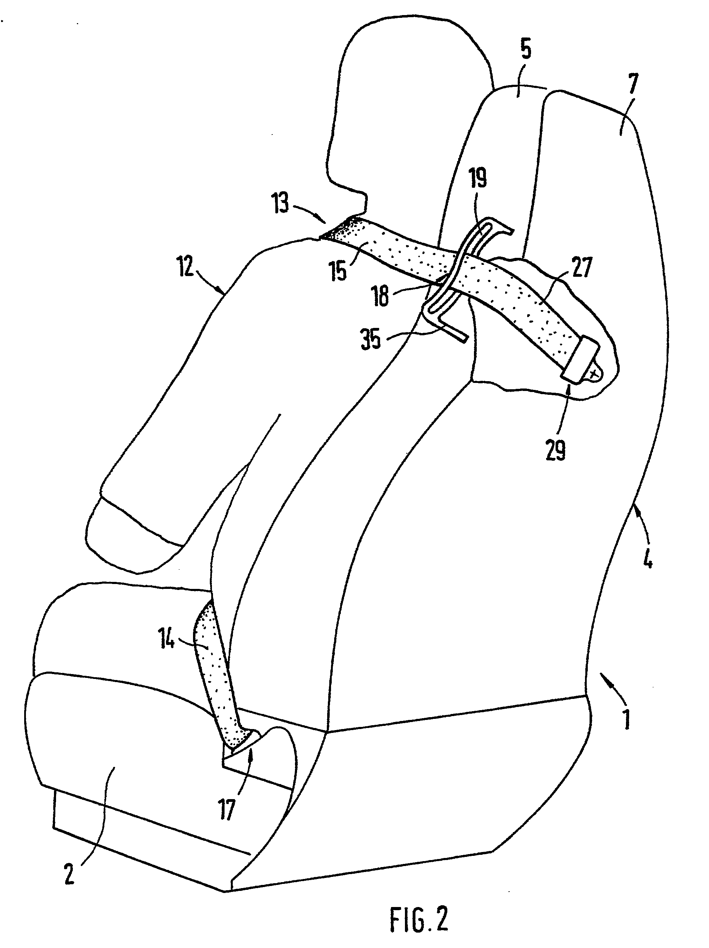

Entsprechend den Fig. 1 und 2 ist die Schlitzführung 19 an einem Beschlagteil 34 ausgebildet, das in geeigneter Weise am Lehnenrahmen 6 befestigt ist. Das Beschlagteil 35 ist beispielsweise aus Aluminium oder aus einem geeigneten Kunststoff hergestellt.

Es besteht ferner die Möglichkeit, die Schlitzführung 19 an einem kastenförmigen Gehäuse 36 vorzusehen, das seitlich über den Lehnenrahmen 6 hervorsteht. Das Gehäuse 36 umfaßt ein Vorderteil 37, an dem die Schlitzführung 19 vorgesehen ist, und eine rückwärtige Abdeckung 38.

In Fig. 6 ist die Schlitzführung 19 und das Umlenkelement 28 zu einer gemeinsamen Baueinheit 39 zusammengefaßt, die am Lehnenrahmen 6 mittels Befestigungsschrauben 40 in Lage gehalten ist. Ein Verkleidungsteil 41 deckt die Aufrolleinrichtung 29, den Gurtabschnitt 27 und einen Teilbereich der Baueinheit 39 ab.

## Patentansprüche

1. Sicherheitsgurt, insbesondere 3-Punkt-Sicherheitsgurt für Fahrzeuge, Flugzeuge oder dergleichen mit einem Schrägschultergurt, dessen oberer Haltepunkt (18) durch eine an einen Lehnenrahmen (6) des Sitzes (1) angeordnete Schlitzführung (19) gebildet wird, wobei ein unteres Ende (20) der schräg zu einer Sitzmittellängsebene (A-A) verlaufenden Schlitzführung weiter von dieser entfernt ist als ein oberes Ende (21) und ein endseitiger Gurtabschnitt (27) des Schrägschultergurtes (15) mit einer Aufrolleinrichtung (29) zusammenwirkt, dadurch gekennzeichnet, daß die einen annähernd S-förmigen Formverlauf aufweisende Schlitzführung (19) zur Anpassung an den jeweiligen Fahrzeuginsassen (12) etwa in Schulterhöhe angeordnet ist, wobei die Breite der Schlitzführung (19) etwa der dreifachen Gurtbandbreite entspricht und daß die Aufrolleinrichtung (29) derart am Lehnenrahmen (6) angebracht ist, daß seine Drehachse (31) etwa gleichgerichtet ist zu einer die Schlitzführung (19) in Längsrichtung durchdringenden Hilfsebene (32) und daß nach der Schlitzführung (19) ein am Lehnenrahmen (6) angeordnetes Umlenkelement (28) für den Schrägschultergurt (15) vorgesehen ist.

2. Sicherheitsgurt nach Anspruch 1, dadurch gekennzeichnet, daß der S-förmige Formverlauf der mit dem Schrägschultergurt (15) zusammenwirkenden Seite (22) der Schlitzöffnung (19) durch zwei aneinandergesetzte Kreisbogenabschnitte (23, 24) gebildet wird, deren Mittelpunkte (25, 26) auf gegenüberliegenden Seiten der Schlitzführung (19) liegen.

3. Sicherheitsgurt nach Anspruch 1, dadurch gekennzeichnet, daß die Aufrolleinrichtung (29) benachbart der Schlitzführung (19) angeordnet ist.

4. Sicherheitsgurt nach den Ansprüchen 1 und 3, dadurch gekennzeichnet, daß die Aufrolleinrichtung (29) schwenkbar an einer Quertraverse (34) des Lehnenrahmens (6) befestigt ist.

5. Sicherheitsgurt nach Anspruch 1, dadurch gekennzeichnet, daß die Schlitzführung (19) an einem Beschlagteil (35) vorgesehen ist, das am Lehnenrahmen (6) befestigt ist.

6. Sicherheitsgurt nach Anspruch 1, dadurch gekennzeichnet, daß die Schlitzführung an einem kastenförmigen Gehäuse (36) angeordnet ist, das den Lehnenrahmen (6) seitlich überragt.

7. Sicherheitsgurt nach Anspruch 1, dadurch gekennzeichnet, daß das Umlenkelement (28) eine kreisförmige Leitfläche (30) für den endseitigen Gurtabschnitt (27) aufweist und am Lehnenrahmen (6) befestigt ist.

## Revendications

1. Ceinture de sécurité, en particulier ceinture de sécurité à 3 points pour véhicules, avions ou analogues, comportant une sangle en bandoulière dont le point de fixation supérieur (13) est formé par un guide à fente (19) placé sur un châssis de dossier (6) du siège (1), une extrémité inférieure (20) du guide à fente s'étendant obliquement par rapport à un plan de symétrie longitudinal (A-A) du siège étant plus éloignée de celui-ci qu'une extrémité supérieure (21) et une section de sangle en bandoulière (15) coopérant avec un dispositif d'enroulement (29), caractérisée en ce que le guide à fente (19) présentant une allure sensiblement en S est, pour l'adaptation à chaque occupant (12) respectif, sensiblement disposé à la hauteur des épaules, la largeur du guide à fente (19) correspondant sensiblement au triple de la largeur de la sangle, et en ce que le dispositif d'enroulement (29) est disposé sur le châssis de dossier (6) de telle façon que son axe de rotation (31) a sensiblement la même direction qu'un plan auxiliaire (32) traversant le guide à fente (19) en direction longitudinale, et en ce qu'après le guide à fente (19) on prévoit un élément de renvoi (28) pour la sangle en bandoulière (15) placé sur le châssis de dossier (6).

2. Ceinture de sécurité selon la revendication 1, caractérisée en ce que l'allure en S de la face (22) du guide à fente (19) coopérant avec la sangle en bandoulière (15) est formée par deux portions d'arc de cercle (23, 24) contiguës dont les centres (25, 26) se trouvent sur des côtés opposés du guide à fente (19).

3. Ceinture de sécurité selon la revendication 1, caractérisée en ce que le dispositif d'enroulement (29) est disposé au voisinage du guide à fente (19).

4. Ceinture de sécurité selon les revendications 1 et 3, caractérisée en ce que le dispositif d'enroulement (29) est fixé de façon à pouvoir basculer à une traverse transversale (34) du châssis de dossier (6).

5. Ceinture de sécurité selon la revendication 1, caractérisée en ce que le guide à fente (19) est prévu sur une ferrure (35) qui est fixée au châssis de dossier (6).

6. Ceinture de sécurité selon la revendication 1, caractérisée en ce que le guide à fente est placé sur un boîtier parallélépipédique (36) qui dépasse latéralement du châssis de dossier (6).

7. Ceinture de sécurité selon la revendication 1, caractérisée en ce que l'élément de renvoi (28) comporte une surface de guidage circulaire (30) pour la section de sangle terminale (27) et est fixé au châssis de dossier (6).

## Claims

1. A seat belt, in particular a 3-point seat belt for vehicles, aeroplanes or the like, having a sloping shoulder belt, the upper fastening point (18) of which is formed by a guide slot (19) arranged on one support frame (6) of the seat (1), a lower end (20) of the guide slot which extends obliquely to a median longitudinal plane (A–A) of the seat being at a greater distance from the latter than an upper end (21), and an end portion (27) of the sloping shoulder belt (15) cooperating with an unwinding device (29), characterized in that the guide slot (19), which has an approximately S-shaped curve, is arranged approximately at shoulder height in order to fit the respective vehicle passenger (12), the width of the guide slot (19) corresponding to approximately three times the width of the belt, and the unwinding device (29) being attached to the support frame (6) in such a way that its axis of rotation (31) is approximately in alignment with an auxiliary plane (32) passing through the guide slot (19) in the longitudinal direction, and a deflexion element (28) arranged on the support frame (6) is provided after the guide slot (19) for the sloping shoulder belt (15).

2. A seat belt according to Claim 1, characterized in that the S-shaped curve of the side (22) of the slot opening (19) cooperating with the sloping shoulder belt (15) is formed by two adjoining arcuate portions (23, 24), the centres (25, 26) of which lie on opposite sides of the guide slot (19).

3. A seat belt according to Claim 1, characterized in that the unwinding device (29) is arranged adjacent the guide slot (19).

4. A seat belt according to Claims 1 and 3, characterized in that the unwinding device (29) is pivotably fastened to a transverse member (34) of the support frame (6).

5. A seat belt according to Claim 1, characterized in that the guide slot (19) is provided on a fitting (35) which is secured to the support frame (6).

6. A seat belt according to Claim 1, characterized in that the guide slot is arranged on a box-shaped casing (36) which projects laterally beyond the support frame (6).

7. A seat belt according to Claim 1, characterized in that the deflexion element (28) has a circular guide surface (30) for the end portion (27) of the belt and is secured to the support frame (6).

FIG.1

FIG.2

FIG.3

FIG.4

EP 0 215 220 B1

FIG.5

EP 0 215 220 B1

FIG.6

EP 0 215 220 B1